# EUROPEAN PATENT SPECIFICATION

(11) **EP 1 765 648 B1**
(45) Date of publication and mention of the grant of the patent: **09.12.2009**
(21) Application number: 04743879.1
(22) Date of filing: 06.07.2004
(51) Int. Cl.: B60T 7/06, B60T 17/22

(54) **SUPPORT BRACKET WITH AN INTEGRATED SWITCH FOR A PEDAL ASSEMBLY**
PEDALSTUTZKONSOLE MIT INTEGRIERTEM SCHALTER
CONSOLE DE SUPPORT A COMMUTATEUR INTEGRE POUR ENSEMBLE PEDALE DE FREIN

(43) Date of publication of application: 28.03.2007
(73) Proprietor: KSR Technologies Co., Ridgetown, ON N9P 2C0 (CA)
(72) Inventor: O'NEILL, Dan, Chatham, Ontario NTL 4MZ (CA); MISHCHENKO, Peter, Fingal, Ontario N0L 1k0 (CA)
(74) Representative: Maxton Langmaack & Partner
(86) International application number: PCT/IB2004/002216
(87) International publication number: WO 2005/028268

(56) References cited:
- EP-A- 0 680 863
- US-A- 6 101 896
- US-A1- 2003 111 328

## Description

### RELATED APPLICATION

This application claims priority of United States Provisional Patent Application Serial No. 60/484,874 filed July 3, 2003.

### BACKGROUND OF THE INVENTION

The present invention relates generally to brake pedals, and more specifically, to a brake pedal assembly with a support bracket having an integrated switch.

Vehicles, and in particular automotive vehicles, include a brake system for controlling the movement of the vehicle. Conventional brake systems include a brake pedal for transmitting a braking force from the vehicle operator to the wheels of the vehicle. The brake pedal is operatively coupled to a brake booster via a push rod. The brake booster is operatively connected to a master cylinder, and the master cylinder is operatively connected to a braking mechanism via brake lines. The braking mechanism is operatively coupled to a wheel of the vehicle and applies the braking force to the wheel to slow down the rotational movement of the wheel.

The brake system also includes various switches that work in conjunction with components associated with the brake system. One example of a switch is a brake light switch that activates a brake light when the brake pedal is depressed. Another example of a switch is a cruise control switch that deactivates the cruise control system when the brake pedal is depressed. In the past, these switches were each separately mounted to the support bracket in order to sense movement of the brake pedal. However, the mounting of one or more switches in this manner is cumbersome, and requires expensive assembly operations.

US 2002/0111328 A1 presents a typical pedal arm which is in contact with a sensor. The technical teaching is focused on a stop lamp switch comprising a specific switch case body. From US 6,101,896 it is known to integrate a switch housing to a pedal arm. From EP 0 680 863 B1 it is known to use a brake system comprising a lever and a pedal both pivotally mounted to an axle. Two different sensors are integrated into this brake system whereby the first sensor is able to detect a movement of the lever. Similarly a second sensor is able to detect a movement of the pedal arm 3. In case that an electrovalve moves an cylinder, the lever is pivoted around the axle, independently of any movement of the pedal arm 3. By that, the sensor linked to the lever is able to detect this movement of the lever as the sensor tip extends through an orifice which is arranged in the pedal arm. Thus, two independent measurement systems are integrated with the brake system.

Thus, there is a need in the art for a brake pedal assembly in which the switches associated with the brake pedal are integrally included with the support bracket.

### SUMMARY OF THE INVENTION

Accordingly, the present invention is a support bracket for a brake pedal assembly with an integral switch for a vehicle. The support bracket includes a generally planar mounting face having at least one aperture for securing the support bracket to the vehicle. The support bracket also includes a radially extending first side wall and second side wall spaced a predetermined distance apart from the first side wall. A portion of the first side wall forms an integral switch housing and contains two generally parallel arcuate slots. The brake pedal assembly further includes a pivot means operatively supported between the first and second side walls, a pedal arm pivotally mounted onto the pivot means, and a pedal link pivotally mounted onto the pivot means, and operatively connected to the pedal arm. At least one pair of contact posts is disposed on the pedal link and positioned to extend therethrough the corresponding arcuate slot in the integral switch housing. A conductive strip operatively interconnects each contact post in the pair of contact posts. A brake booster means is operatively attached to both the pedal link and the housing. The support bracket further includes a switch housing cover enclosing the integral switch housing. A switching means is operatively disposed on an inside surface of the cover, and is in electrical communication with the contact posts as the contact posts travel within the arcuate slot in response to movement of the pedal arm, to electrically communicate between the switching means and an associated vehicle component.

One advantage of the present invention is that a support bracket with an integral switch is provided for a brake assembly that improves packaging of the brake pedal assembly. Another advantage of the present invention is that a support bracket with an integral switch is provided for a brake assembly that is easier to install on the vehicle. A further advantage of the present invention is that a support bracket with an integral switch is provided for a brake assembly that is more cost effective to manufacture. Still a further advantage of the present invention is that a support bracket is provided that can be adapted for use on a throttle or clutch pedal.

Other features and advantages of the present invention will be readily appreciated as the same becomes better understood after reading the subsequent description taken in conjunction with the accompanying drawings.

### BRIEF DESCRIPTION OF THE DRAWINGS

Fig. 1 is a partial perspective side view of a brake pedal assembly with an integral switch, according to the present invention.
Fig. 2 is another perspective view of the brake pedal assembly of Fig. 1 without the switch housing cover, according to the present invention.
Fig. 3 is a perspective view of the switch housing cover for the brake pedal assembly of Fig. 1, according to the present invention.

### DESCRIPTION OF THE INVENTION

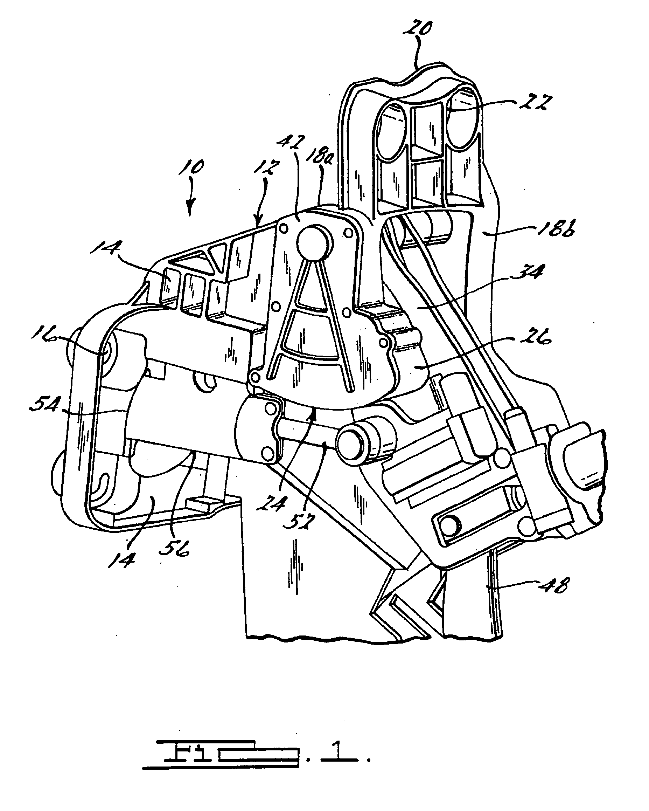

Referring to Figs. 1-3, a brake pedal assembly 10 with a support bracket having an integral switch for translating a signal between a vehicle operator or driver (not shown) and a brake actuating mechanism (not shown) is illustrated. As is known in the art, the brake pedal assembly 10 is part of a comprehensive brake system for slowing down the vehicle. It should be appreciated that the brake pedal assembly 10 may be either a fixed height brake pedal assembly or an adjustable height brake pedal assembly. In this example, an adjustable height pedal is illustrated. An example of an adjustable height brake pedal assembly is disclosed in commonly assigned U.S. Patent Application Serial No. 09/882,981, which is incorporated herein by reference. In addition, the brake system may either be a conventional mechanical brake system or an electronic brake system. It should also be appreciated that the support bracket with integral switch may be utilized on other types of pedals, such as the accelerator pedal or clutch pedal or the like.

The brake pedal assembly 10 is fixedly mounted to the vehicle in a conventional position beneath the instrument panel. The brake pedal assembly 10 includes a support bracket 12 for attaching the brake pedal assembly 10 to a dash panel portion of the vehicle. The support bracket 12 includes a generally planar mounting face 14 having a plurality of apertures 16 for attaching the support bracket 12 to the vehicle, such as by bolting.

The support bracket 12 also includes two spaced apart side walls 18, a first side wall 18a and a second side wall 18b extending radially from the mounting face 14. The upper end of the first and second side walls 18a, 18b are interconnected by an upwardly extending upper wall 20. The upper wall 20 is spaced a predetermined distance apart from the mounting face 14. The upper wall 20 includes a plurality of apertures 22 for fixedly mounting the support bracket 12 to a portion of the vehicle. The first and second side walls 18a, 18b also include an aperture 30 for receiving a pivot pin 32 at a pedal arm pivot point. The brake pedal arm is supported between the first and second side walls 18a, 18b on the pivot pin 32 in a manner to be described.

The support bracket 12 includes a switch 24 integrally formed on an exterior portion of the first side wall 18a. The switch 24 has an outwardly projecting wall 26 that defines the perimeter of the integral switch 24. At least one arcuate slot 28 is located in the first side wall 18a, within the switch wall 26 perimeter. There are two substantially parallel arcuate slots 28. In this example, the slots are positioned in a radial direction below the pivot point, which is also within the switch wall 26 perimeter.

The switch 24 also includes a pair of contact posts 36 disposed on a pedal link (to be described). It should be appreciated that there is a pair of posts 36 associated with each switch. The posts 36 are arranged so as to extend therethrough a corresponding slot 28 in the first side wall 18a of the support bracket 12. Preferably, the posts 36 move freely within the slots 28 when the brake pedal is actuated. The switch 24 also includes an electrically conductive means, such as a conductive strip 38 or the like, interconnecting each post 36 of the corresponding pair of posts. Each conductive strip 38 includes a plurality of wire brushes 40 disposed on an outer surface, for making electrical contact in a manner to be described. Another example of a conductive means is a receiving coil.

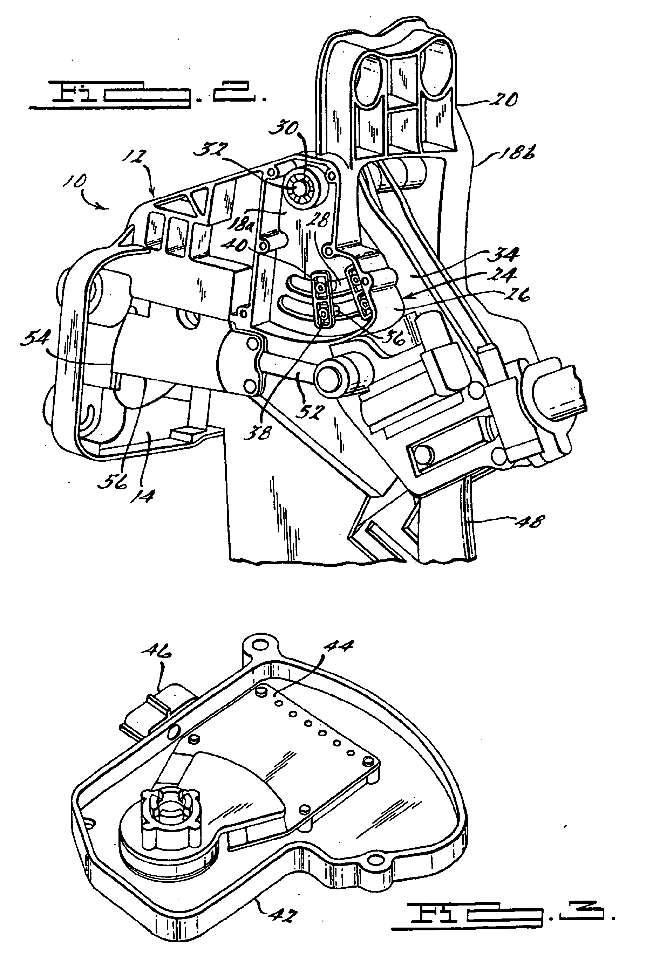

The switch 24 also includes a cover plate 42 that is secured to the switch wall 26, as shown in Fig. 2. For example, the cover 42 may be secured to the switch wall 26 using a fastener, such as a screw or the like. The cover 42 is configured to conform to the shape of the switch wall 26. As shown in Fig. 3, the other components for the switch are mounted to an inside surface of the cover 42. In this example, a switching means, such as a circuit board 44 is fixedly mounted to the cover 42.

The cover 42 may also include an integrally formed connecter 46 for electrically connecting the switch 24 to the particular component operated by the switch 24. Various types of components are contemplated. For example, each pair of contact posts 36 may be connected to a brake light circuit or a cruise control deactivation circuit, or a brake interlock circuit, or a clutch circuit or a brake by wire circuit.

Each pair of contact posts 36 has a corresponding electrical contact means on the circuit board. The circuit board contact means is preferably mounted a few degrees along an arc from the initial starting position. Thus, when the brake pedal is depressed, the strip 38 and contact posts 36 move through the arcuate slot to electrically connect the pairs of contacts to close the electrical circuits 28. The electrical contact on the circuit board results in the activation of the associated component, such as the brake light or cruise control deactivation, or brake interlock or brake by wire.

The brake pedal assembly 10 includes a pivot pin 32 extending therebetween the side walls 18. The pivot pin 32 pivotally supports a pedal arm 48, and in particular an upper end of the pedal arm 48, about a pivot axis. Preferably, the brake pedal assembly 10 includes a torsion spring (not shown) operatively disposed on the pivot pin 20 for controlling the movement of the brake pedal assembly 10 between a resting and braking position, as is known in the art.

The brake pedal assembly 10 further includes a pair of pivotally interconnected pedal links 34. Each pedal link 34 is a generally planar member. A first end of the pedal link 34 is pivotally supported by the pivot pin 32. It should be appreciated that in this example, there are two pedal links 34, with each positioned on either side of the pedal arm 48. Advantageously, the use of two pedal links 34 better distributes the load transferred to a brake rod booster rod from the pedal arm 48. The opposite end of the pedal link 34 supports a drive mechanism 50 for adjusting an initial position of the pedal arm. An example of such an adjustable pedal assembly is disclosed in commonly assigned U.S. Patent Number 10/204,725.

The brake pedal assembly further includes a brake booster rod 52 secured to the pedal link 28. It should be appreciated that the brake booster rod 52 is operatively attached to the brake booster, as is known in the art, and transmits the force of the operator applying the brakes from the brake pedal assembly 10 to the braking system. The brake rod 52 extends through an aperture 54 in the mounting face 14 of the support bracket 12.

Alternatively, the brake rod is operatively attached to a brake hysteresis mechanism 56. This mechanism may also be attached to the support bracket 12, such as the second side wall 18b in this example. The brake booster hysteresis mechanism 56 is used for a brake by wire application to simulate the "feel" of the applied braking force.

It should be appreciated that the brake pedal assembly 10 may include other components, as is known in the art. For example, the brake pedal assembly 10 may include a stop (not shown) extending therebetween the side arms 18 of the support bracket 12 over the pivot pin 20, to position the pedal links 34 when the pedal arm 48 is in a resting position. The brake pedal assembly 10 further includes a pedal pad (not shown) mounted to a lower end of the pedal arm 48. The pedal pad provides a pedal actuation point for operating the pedal assembly.

In operation, as the driver depresses the pedal pad, the pedal arm 48 and pedal links 34 pivot about the pedal arm pivot point. The movement of the pedal link 34 causes the contact posts 36 to travel through the slots 28. At the same time, when the brushes 40 on the strip 38 come into electrical contact with a corresponding contact on the circuit board 44, an electrical connection is made. A signal is transmitted to the corresponding component, such as the brake light or cruise control, to implement the desired action. It should be appreciated that the switch senses the rotary movement of the pedal arm, and transmits this motion to the switch to implement the desired action.

The present invention has been described in an illustrative manner. It is to be understood that the terminology which has been used is intended to be in the nature of words of description rather than of limitation. Many modifications and variations of the present invention are possible in light of the above teachings. Therefore, within the scope of the appended claims, the present invention may be practiced other than as specifically described.

## Claims

1. A brake pedal assembly (10) for a vehicle with a support bracket containing an integral switch (24), said brake pedal assembly (10) comprising: a support bracket (12) having a generally planar mounting face (14), wherein said mounting face (14) includes at least one aperture (22) for securing the support bracket to the vehicle; a first side wall (18a) and a second side wall (18b) spaced a predetermined distance apart from said first side wall (18a), and each side wall extends radially from said mounting face (14), wherein an integral switch portion (24) of said first side wall (18a) contains two generally parallel arcuate slots (28); a pivot means (32) operatively supported between said first and second side walls; a pedal arm (48) pivotally mounted onto said pivot means (32); a pedal link (34) pivotally mounted onto said pivot means (32), and operatively connected to said pedal arm (48) wherein said pedal link (34) is a generally planar member; at least one pair of contact posts (36) disposed on said pedal link (34) and positioned so as to extend therethrough the corresponding arcuate slot (28) in said integral switch portion (24) of said first side wall (18a); a conductive means operatively interconnecting each contact post (36) in the pair of contact posts (36); a brake booster means operatively attached to said pedal link (34); and supported by the housing; and a switch cover plate (42) secured to said first side wall (18a), wherein a switching means (44) is operatively disposed on an inside surface of said cover plate (42), and said contact posts (36) travel within the arcuate slot (28) in response to movement of the pedal arm (48) to electrically engage said switching means (44) and send an electrical signal to a component in communication with the integral switch (24).

2. A brake pedal assembly (10) as set forth in claim 1 wherein said first side wall (18c), includes an outwardly projecting switch wall (26) defining a perimeter of the integral switch portion of said first side wall (18a), and said switch cover (42) is secured to said switch wall (26).

3. A brake pedal assembly (10) as set forth in claim 1, 2 or 3 further comprising an upper wall (20) interconnecting said spaced apart side arms, wherein said upper wall (20) is generally parallel to and spaced a predetermined distance from said mounting face (14) and said upper wall (20) includes at least one aperture for securing the support bracket to the vehicle.

4. A brake pedal assembly (10) as set forth in one of the claims 1 to 4 wherein said switching means (44) is a printed circuit board.

5. A brake pedal assembly (10) as set forth in one of the claims 1 to 5 wherein an integral switch portion of said first side wall (18a) includes an outwardly projecting switch wall (26) defining a perimeter of the integral switch (24).

6. A brake pedal assembly (10) as set forth in one of the claims 1 to 6 wherein a conductive strip (38) operatively interconnecting each contact post (36) in the pair of contact posts (36), wherein said conductive strip (38) includes a plurality of brushes (40).

7. A brake pedal assembly (10) as set forth in one of the claims 1 to 7 wherein a switch cover plate (42) includes an integrally formed connector (46) for electrically connecting said switching means (44) to a component in communication the an integral switch (24).

8. A brake pedal assembly (10) as set forth in one of the claims 1 to 5 wherein as said electrically conductive means (36) is used a receiving coil.

9. A brake pedal assembly (10) as set forth in one of the claims claim 1 to 9 wherein an electrical contact on a circuit board results in an activation of an associated component such as a brake light, a cruise control deactivation, a brake interlock or a brake by wire.

10. Method for sending an electrical signal to a component in communication with an integral switch of a brake, accelerator or clutch pedal assembly, whereby a brake, accelerator or clutch pedal assembly (14) according to any of the preceding claims is used, wherein moving of the pedal arm (48) moves a pedal link thereby causing a pair of contact posts (36) extending to an arcuate slot to travel along the slot thereby engaging switching means and transmitting a signal to the corresponding component.

11. Use of a construction of the brake assembly as set forth in one of the preceding claims for an accelerator pedal or a clutch pedal.

## Patentansprüche

1. Bremspedalaufbau (10) für ein Fahrzeug mit einer Stützhalterung, beinhaltend einen Einbauschalter (24), wobei der Bremspedalaufbau (10) umfasst: eine Stützhalterung (12), die eine im wesentlichen ebene Montagefläche (14) aufweist, wobei die Montagefläche (14) mindestens eine Öffnung (22) zum Sichern der Stützhalterung am Fahrzeug umfasst; eine erste Seitenwand (18a) und eine zweite Seitenwand (18b), die beabstandet in einer vorbestimmter Entfernung von der ersten Seitenwand (18a) ist und sich jede Seitenwand radial von der Montagefläche (14) aus erstreckt, wobei ein Einbauschalterabschnitt (24) der ersten Seitenwand (18a) zwei im wesentlichen parallele bogenförmige Schlitze (28) enthält; ein Drehmittel (32), das zwischen der ersten und zweiten Seitenwand wirkend gestützt wird; ein Pedalarm (48), der auf dem Drehmittel (32) drehbar angebracht ist; eine Pedalverbindung (34), die auf dem Drehmittel (32) montiert ist und mit dem Pedalarm (48) zusammen wirkend verbunden ist, wobei die Pedalverbindung (34) ein im wesentlichen ebenes Bauteil ist; mindestens ein Paar Kontaktstäbe (36), die auf der Pedalverbindung (34) angeordnet und derart positioniert sind, um sich in den entsprechenden bogenförmigen Schlitz (28) in dem Einbauschalterabschnitt (24) der ersten Seitenwand (18a) zu erstrecken; ein Leitungsmittel, welches jeden Kontaktstab (36) in dem Kontaktstab-Paar (36) betriebswirksam miteinander verbindet; ein Bremskraftverstärkungsmittel, das wirksam an der Pedalverbindung (34) angeordnet und durch das Gehäuse gestützt ist; und eine Schalterabdeckplatte (42), gesichert zu der ersten Seitenwand (18a), wobei ein Schaltmittel (44) betriebswirksam auf einer Innenseitenoberfläche der Abdeckplatte (42) angeordnet ist, und sich die Kontaktstäbe (36) innerhalb des bogenförmigen Schlitzes (28) in Reaktion auf die Bewegung des Pedalarms (48) bewegen, um Schaltmittel (44) elektrisch zu kontaktieren und ein elektrisches Signal zu einer mit dem Einbauschalter in Verbindung stehenden Komponente zu senden.

2. Bremspedalaufbau (10) nach Anspruch 1, **dadurch gekennzeichnet, dass** die erste Seitenwand (18a) eine nach außen vorstehende Schalterwand (26) umfasst, die einen Umfang des Einbauschalterabschnitts der ersten Seitenwand (18a) bestimmt und die Schalterabdeckung (42) an der Schalterwand (26) gesichert ist.

3. Bremspedalaufbau (10) nach Anspruch 1 oder 2, beinhaltend ferner eine obere Wand (20), die die voneinander beabstandeten Seitenarme verbindet, wobei die obere Wand (20) im wesentlichen parallel und in einem vorbestimmten Abstand von der Montagefläche (14) angeordnet ist und die obere Wand (20) mindestens eine Öffnung zum Sichern der Stützhalterung am Fahrzeug umfasst.

4. Bremspedalaufbau (10) nach einem der Ansprüche 1 bis 3, **dadurch gekennzeichnet, dass** das Schaltmittel (44) eine Leiterplatte ist.

5. Bremspedalaufbau (10) nach einem der Ansprüche 1 bis 4, **dadurch gekennzeichnet, dass** ein Einbauschalterabschnitt der ersten Seitenwand (18a) eine nach außen vorspringende Schalterwand (26) umfasst, die einen Umfang des Einbauschalters (24) bestimmt.

6. Bremspedalaufbau (10) nach einem der Ansprüche 1 bis 5, **dadurch gekennzeichnet, dass** eine elektrische Kontaktleiste (38) jeden Kontaktstab (36) des Paares an Kontaktstäben (36) wirksam miteinander verbindet, wobei die elektrische Kontaktleiste (38) eine Vielzahl an Bürsten (40) umfasst.

7. Bremspedalaufbau (10) nach einem der Ansprüche 1 bis 6, **dadurch gekennzeichnet, dass** eine Schalterabdeckung (42) einen integriert geformten Verbinder (46) umfasst, um das Schaltmittel (44) elektrisch mit einer Komponente zu verbinden, die in Verbindung mit dem Einbauschalter (24) steht.

8. Bremspedalaufbau (10) nach einem der Ansprüche 1 bis 4, **dadurch gekennzeichnet, dass** als elektrisches Leitungsmittel eine Empfangsspule verwendet wird.

9. Bremspedalaufbau (10) nach einem der vorhergehenden Ansprüche 1 bis 8, **dadurch gekennzeichnet, dass** ein elektrischer Kontakt auf einer Leiterplatte zu einer Aktivierung einer zugehörigen Komponente führt, wie einem Bremslicht, einer Tempomat-Inaktivierung, einer Bremsverriegelung oder einer Brake-by-Wire-Einrichtung.

10. Verfahren zum Senden eines elektrischen Signals zu einer Komponente, die in Verbindung mit einem Einbauschalter eines Brems-, eines Gaspedal- oder eines Kupplungspedal-Aufbaus steht, wobei ein Brems-, ein Gaspedal- oder ein Kupplungspedal-Aufbau (10) nach einem der vorhergehenden Ansprüche verwendet wird, wobei Bewegen des Pedal-Arms (48) eine Pedal-Verbindung bewegt, wodurch ein Paar Kontaktstäbe (36), die sich in einen bogenförmigen Schlitz erstrecken, sich entlang des Schlitzes bewegen, dabei ein Schaltmittel kontaktieren und dabei der korrespondierenden Komponente ein Signal übersenden.

11. Verwendung einer Konstruktion eines Bremspedalaufbaus (10) nach einem der vorhergehenden Ansprüche für ein Gaspedal oder ein Kupplungspedal.

## Revendications

1. Ensemble de pédale de frein (10) pour véhicule avec un support comportant un interrupteur intégré (24), ledit ensemble de pédale de frein (10) comportant : un support (12) ayant une façade de montage généralement plane (14), ladite façade de montage (14) présentant au moins une ouverture pour assurer la fixation du support sur le véhicule ; une première paroi latérale (18a) et une seconde paroi latérale (18b) espacé d'une distance prédéterminée de ladite première paroi latérale (18a) et chaque paroi latérale s'étendant radialement depuis ladite façade de montage (14), ensemble dans lequel une partie d'interrupteur intégré (24) de ladite première paroi latérale (18a) contient deux fentes en arc généralement parallèles (28) ; des moyens de pivotement (32) supportés en fonctionnement entre lesdites première et seconde parois latérales ; un bras de pédale (48) monté pivotant sur lesdits moyens de pivotement (32) ; une biellette de pédale (34) montée pivotante sur lesdits moyens de pivotement (32) et fonctionnellement reliée audit bras de pédale (48), ladite biellette de pédale (34) étant un organe généralement plan ; au moins une paire de bornes de contact (36) disposées sur ladite biellette de pédale (34) et positionnées de façon à s'étendre à travers lesdites fentes en arc (28) correspondantes dans ladite partie d'interrupteur intégré (24) de ladite première paroi latérale (18a); des moyens conducteurs interconnectant opérationnellement chaque borne de contact (36) de la paire de bornes de contact (36) ; des moyens de servofrein opérationnellement relié à ladite biellette de pédale (34) et supportés par le boitier; et une plaque de recouvrement de l'interrupteur (42) fixée sur ladite première paroi latérale (18a), un organe de commutation (44) étant opérationnellement disposé sur une surface intérieure de plaque de recouvrement de l'interrupteur (42) et lesdites bornes de contact (36) se déplaçant dans les fentes en arc (28) en réponse au mouvement du bras de pédale (48) pour connecter électriquement lesdits moyens de commutation et envoyer un signal électrique à un composant en communication avec l'interrupteur intégré (24).

2. Ensemble de pédale de frein (10) selon la revendication 1, dans lequel ladite première paroi latérale (18a) présente une paroi d'interrupteur s'étendant vers l'extérieur (26) définissant un périmètre de la partie d'interrupteur intégré de ladite première paroi latérale (18a) et ladite plaque de recouvrement (42) est fixée à ladite paroi d'interrupteur (26).

3. Ensemble de pédale de frein (10) selon la revendication 1 ou 2, comportant en outre une paroi supérieure (20) reliant lesdits bras de pédale espacés, ladite paroi supérieure (20) étant généralement parallèle et espacée d'une distance prédéterminée de ladite façade de montage (14) et ladite paroi supérieure (20) comprenant au moins une ouverture pour assurer la fixation du support sur le véhicule.

4. Ensemble de pédale de frein (10) selon l'une des revendications 1 à 3, dans lequel ledit organe de commutation (44) est une carte de circuit imprimé.

5. Ensemble de pédale de frein (10) selon l'une des revendications 1 à 4, dans lequel une partie d'interrupteur intégré de ladite première paroi latérale (18a) comprend une paroi d'interrupteur s'étendant vers l'extérieur (26) définissant un périmètre de l'interrupteur intégré (24).

6. Ensemble de pédale de frein (10) selon l'une des revendications 1 à 5, dans lequel une bande conductrice (38) interconnecte opérationnellement chaque borne de contact (30) d'une paire de bornes de contact (30), ladite bande conductrice (38) comprenant une pluralité de balais (40).

7. Ensemble de pédale de frein (10) selon l'une des revendications 1 à 6, dans lequel une plaque de recouvrement de l'interrupteur (42) comprend un connecteur en partie intégrante pour relier électriquement ledit organe de commutation (44) à un composant en communication avec l'interrupteur intégré.

8. Ensemble de pédale de frein (10) selon l'une des revendications 1 à 4, dans lequel un capteur est utilisé comme moyen conducteur électrique (38).

9. Ensemble de pédale de frein (10) selon l'une des revendications 1 à 8, dans lequel un contact électrique sur la carte de circuit imprimé provoque l'activation d'un composant associé tel qu'un feu de frein, la désactivation du régulateur de vitesse, un verrouillage de frein ou un freinage par commande électronique.

10. Procédé pour envoyer un signal électronique à un composant en communication avec un interrupteur intégré d'un ensemble de pédale de frein, d'accélérateur ou d'embrayage dans lequel un ensemble de pédale de frein, d'accélérateur ou d'embrayage (10) selon l'une quelconque des revendications précédentes est utilisé, dans lequel le mouvement du bras de pédale (48) déplace une biellette de pédale, ce qui a pour résultat qu'une paire de bornes de contact (36) s'étendant en traversant une fente arquée se déplace le long de cette fente, entrainant ainsi des moyens de commutation et transmettant un signal à un composant correspondant.

11. Utilisation de l'ensemble de pédale de frein selon l'une quelconque des revendications précédentes pour une pédale d'accélérateur ou une pédale d'embrayage.
